# EUROPEAN PATENT APPLICATION

(11) **EP 4 800 786 A1**
(43) Date of publication of application: **02.09.2026**
(21) Application number: 25745474.4
(22) Date of filing: 20.01.2025
(51) Int. Cl.: H01M 10/04, B65G 57/03, B65G 43/08

(54) **SECONDARY BATTERY STACKING APPARATUS AND CONTROL METHOD THEREOF**

(30) Priority: 22.01.2024 KR 20240009589
(71) Applicant: LG Energy Solution, Ltd., Seoul 07335 (KR)
(72) Inventor: SO, Hee Young, Daejeon 34122 (KR); BAEK, Ju Hwan, Daejeon 34122 (KR); KEUM, Dong Yeon, Daejeon 34122 (KR); KIM, Jung Won, Daejeon 34122 (KR); JEONG, Do Hwan, Daejeon 34122 (KR)
(74) Representative: Plasseraud IP
(86) International application number: PCT/KR2025/001050
(87) International publication number: WO 2025/159457

(57) **Abstract**

To achieve the above-described objects, according to one example of the present invention, it is possible to provide a secondary battery stacking device and a secondary battery stacking method for manufacturing an electrode assembly product by laminating a second semifinished product on a first semifinished product laminated on a pallet.

Even though stacking should be performed so that the center of the second semifinished product coincides with the center of the first semifinished product, it is not easy to calculate the actual center values of the first semifinished product when shape disturbance occurs at both ends of the first semifinished product.

In the present example, it is possible to provide a stacking device and a stacking method capable of performing stacking by calculating center values of a first semifinished product in a diagonal manner instead of calculating the center values of the first semifinished product in a conventional vertical manner.

## Description

### Technical Field

The present invention relates to a secondary battery stacking device for manufacturing a secondary battery cell by stacking electrodes, which relates to an electrode stacking device capable of improving stacking accuracy by correcting measurement disturbance of electrodes as stacking targets, and a control method thereof.

This application claims the benefit of priority based on Korean Patent Application No. 10-2024-0009589 dated January 22, 2024, the disclosure of which is incorporated herein by reference in its entirety.

### Background Art

Secondary batteries capable of charging and discharging have recently been widely used in various devices. Secondary batteries attract attention as an eco-friendly energy source capable of reducing air pollution, and the like, especially from existing vehicles, and the like, using fossil fuels.

Secondary batteries can be classified into lithium-ion batteries, lithium-ion polymer batteries, and the like, depending on constitutions of electrodes and electrolytes, and can be classified into rectangular batteries, pouch-type batteries, and cylindrical batteries, and the like, depending on shapes of battery cases.

An electrode assembly built into the battery case has a structure consisting of a positive electrode, a negative electrode, and a separator interposed between the positive electrode and the negative electrode, which can be referred to as a power generation element capable of charging and discharging. The electrode assembly can be classified into a jelly roll type in which the separator is interposed between long sheet-shaped positive and negative electrodes coated with active materials, and a stack type in which multiple positive and negative electrodes are sequentially stacked in a state where the separators are interposed.

In the case of a stack-type secondary battery, it can be manufactured by laminating individual positive electrodes, negative electrodes, and separators one by one, and can also be manufactured by laminating semifinished cells.

A semi-product can be formed by laminating a separator, a positive electrode, a separator, and a negative electrode, which can be called a mono-cell. A semi-product can be formed by laminating a separator, a positive electrode, and a separator, which can be called a half-cell. The mono-cell (20) can be formed by laminating a separator (25), a negative electrode (23), a separator (25), and a positive electrode (24), and the half-cell (30) can be formed by laminating a separator (25), a negative electrode (23), and a separator (25). Of course, the lamination order and number of laminations in the semi-product can be different.

An electrode assembly, which is a finished product, can be finally manufactured by laminating mono-cells, which are multiple semifinished products, and then laminating a half-cell, which is a semifinished product, at last, and the thickness of the electrode assembly can be determined according to the number of laminated mono-cells.

The mono-cell and the half-cell can be referred to as a first semifinished product and a second semifinished product, respectively, and a state where a plurality of mono-cells is laminated can also be referred to as a first semifinished product.

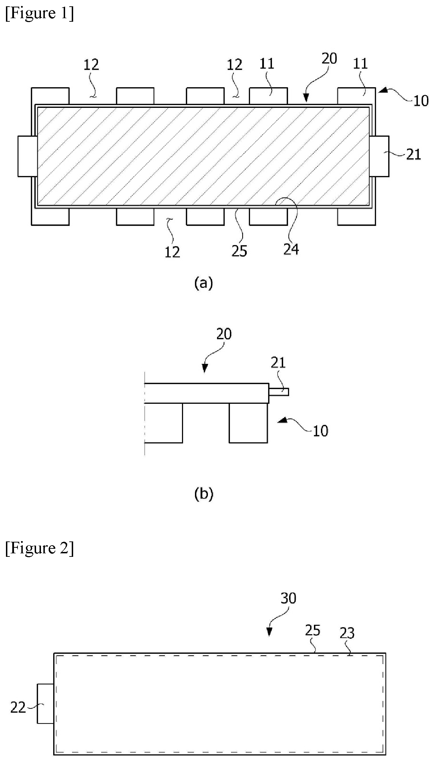

Figure 1 illustrates an appearance in which a plurality of mono-cells (20) as one example of a semifinished product is laminated to be seated on a pallet (10), and Figure 2 illustrates a half-cell (30) as one example of a semifinished product.

The pallet (10) includes a plurality of supports (11), and an empty space (12) is formed between the support (11) and the support (11). Using this empty space, a P&P (pick and place) device can move the electrode assembly and tape the outer surface of the electrode assembly.

In a state where a plurality of mono-cells (20) is laminated, both ends of the mono-cells (20) can be positioned on the supports (11) located at both ends, and a positive lead (22) and a negative lead (21) can be out of the supports (11) located at both ends. In a state where a plurality of mono-cells (20) is loaded, only the positive electrode (24) and the separator (25) can be seen on a flat surface.

In a state where a plurality of mono-cells (20) is supported, the mono-cells (20) can ideally be horizontal, as shown in Figure 1(b).

In the state where the mono-cells (20) are loaded, the half-cell (30) illustrated in Figure 2 is additionally loaded, whereby a loading process for manufacturing the electrode assembly can be completed. In this instance, the loading accuracy of the mono-cell (20) and the half-cell (30) is very important. That is, ideally, the half-cell should be loaded to match the mono-cell (20), and particularly, the mono-cell (20) and the half-cell (30) should be loaded so that their centers match up.

To this end, center position values (x, y, θ) or deviations of the mono-cell (20) on the x-y plane can be measured first through a vision.

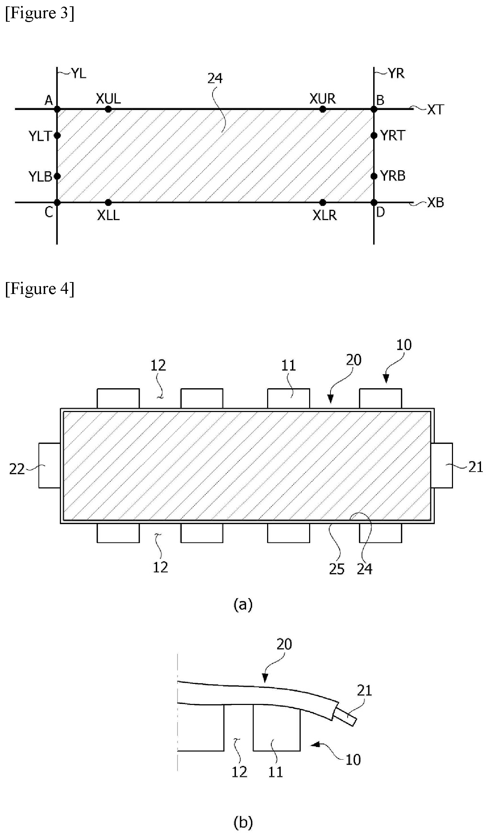

As illustrated in Figure 3, on the image acquired through the vision, virtual straight lines of ROI (region of interest) reference points of the long sides (upper and lower horizontal sides) and the short sides (left and right vertical sides) can be generated and subjected to operation to calculate intersection points.

As one example, to calculate the upper left corner point (A), first, the straight line (XT) of the upper long side is calculated and created by the positions of the ROI reference points (XUL, XUR) of the upper long side. Then, the straight line (YL) of the left short side is calculated and created by the positions of the ROI reference points (YLT, YLB) of the left short side. Finally, the intersection of the XL line and the YL line is calculated. At this time, the calculated intersection point can be called the upper left corner point (A).

In the same method, by calculating the upper right corner point (B), the lower left corner point (C), and the lower right corner point (D), it is possible to acquire the datum of the mono-cell (20) having four vertices in total.

The center position values (x, y, θ) or the deviation values of the center position of the mono-cell (20) can be calculated and measured through the four corner points.

Using the center position values or the deviation values of the center position of the mono-cell (20), the half-cell (30) is loaded on top of the mono-cell (20), whereby the loading for manufacturing the electrode assembly can be completed.

However, when calculating the center position of the mono-cell (20) in this method, there is a problem that the shape disturbance due to lifting or bending of both ends of the laminated mono-cell (20) cannot be sufficiently reflected. This is because the lifting or bending (bending upward or downward) of both ends of the mono-cell (20) occurs in the z-direction gravity direction, and when calculating the intersection of the straight line and the straight line on the x-y plane, an unexpected error is likely to occur.

As the center position of the mono-cell (20) is not accurately calculated due to the shape disturbance, it is possible to result in full-width defects by the angle distortion, which can cause a defect in which the outermost shell electrode breaks.

Therefore, it is necessary to find a way capable of minimizing the defects that appear in the finished products due to the error caused by the shape disturbance during the semifinished product loading process.

### Disclosure

### Technical Problem

It is an object of the present invention to provide a stacking device and a stacking method capable of performing accurate stacking.

Through one example of the present invention, it is intended to provide a stacking device and a stacking method capable of effectively correcting shape disturbance of semifinished products which are transferred and wait for loading.

Through one example of the present invention, it is intended to provide a stacking device and a stacking method capable of effectively measuring a datum of a semifinished product even when the shape and support position of a pallet on which the semifinished product is supported are different.

Through one example of the present invention, it is intended to provide a stacking device and a stacking method capable of precisely calculating center values of a semifinished product by effectively correcting shape disturbance caused by curving or bending at both ends of the semifinished product.

Through one example of the present invention, it is intended to provide a stacking device and a stacking method capable of measuring a datum of a semifinished product through four virtual corner points based on the datum using a diagonal angle.

Through one example of the present invention, it is intended to provide a stacking device and a stacking method capable of immediately and effectively responding to a lamination error having a tendency by re-measuring a datum of a finished product after lamination and automatically correcting offsets of a lamination device.

### Technical Solution

To achieve the above-described objects, according to one example of the present invention, it is possible to provide a secondary battery stacking device for laminating a second semifinished product on a first semifinished product laminated on a pallet to manufacture an electrode assembly product, and a stacking method thereof.

Even though stacking should be performed so that the center of the second semifinished product coincides with the center of the first semifinished product, it is not easy to calculate the actual center values of the first semifinished product when shape disturbance occurs at both ends of the first semifinished product.

In the present example, it is possible to provide a stacking device and a stacking method capable of performing stacking by calculating center values of a first semifinished product in a diagonal manner instead of calculating the center values of the first semifinished product in a conventional vertical manner.

To achieve the above-described objects, according to one example of the present invention, it is possible to provide a secondary battery stacking method for manufacturing a finished electrode assembly product by stacking a second semifinished product on a first semifinished product. Here, the first semifinished product may be formed by loading the same semifinished product multiple times, and finally, as the second semifinished product is loaded, the laminating or loading process is completed, whereby the electrode assembly may be manufactured.

In order to achieve the above-described objects, according to one example of the present invention, it is possible to provide a stacking device and a stacking method, comprising a pallet supporting a central portion of a first semifinished product cell in a rectangular shape without supporting both ends, and a first vision device generating a plane image on the upper portion of the first semifinished product supported on the pallet, and comprising a controller calculating a center position and a twist angle of the first semifinished product cell by using angles of virtual diagonals generated at four corner inner sides, respectively, in the plane image, to correct shape disturbance of the first semifinished product. The process of performing an intermediate calculation process for finally calculating the center position and the twist angle of the first semifinished product cell through the plane image may comprise a process of measuring a datum of the first semifinished product and a process of processing the datum.

According to one example of the present invention, a secondary battery stacking method may be provided, which is characterized by comprising a step of measuring a datum of the first semifinished product through an image acquired through a first vision device; a step of measuring a datum of the second semifinished product through an image acquired through a second vision device; and a step of laminating the second semifinished product on the first semifinished product through a loading device after correction position operation using the datum of the first semifinished product and the datum of the second semifinished product, wherein to correct shape disturbance of the first semifinished product when measuring the datum of the first semifinished product, virtual corner positions for the first semifinished product are calculated, using virtual diagonal angles generated at corner inner sides on the image of the first semifinished product.

The virtual diagonal may be created by connecting a reference point and a reference point in two intersecting straight lines forming the corner, respectively, on the image of the first semifinished product.

Here, the virtual diagonal angle may be an angle (β) between the diagonal and the y-axis (vertical). Of course, the virtual diagonal angle may also be an angle between the diagonal and the x-axis (horizontal line). If no sagging occurs in the z-axis direction at one end of the first semifinished product, the virtual diagonal angle (β) has a fixed value. However, as the sagging increases, the deviation of the diagonal angle from the fixed value increases.

Therefore, a sagging angle may be calculated through the calculated diagonal angle (β). Through this, a corner point in a state before the sagging occurs, that is, an ideal plane state, may be calculated and derived.

The remaining three corner points are derived in the same method, whereby the datum of the first semifinished product may be measured through a total of four corner points.

The shape disturbance may be due to curving (bending) or sagging of the first semifinished product.

Through the datum of the first semifinished product, the center values of the first semifinished product may be calculated as an x value, a y value, and a θ value, which is a twist angle, on an x-y plane.

Here, the four corner point coordinates, center coordinates, and twist angle that the first semifinished product has in an ideal plane state can be called the datum of the first semifinished product. Of course, the intermediate values for calculating this information can also be called the datum of the first semifinished product.

It is preferable that the process of measuring the datum of the first semifinished product is visually displayed through a display.

The image of the first semifinished product and the virtual diagonal on the image may be displayed through a display. Then, the virtual diagonal angle may be displayed. The measured corner value may be displayed through this. The virtual diagonal may be displayed for each of the four corners, and it is preferable that the datum measurement process of the first semifinished product is visually displayed through this.

After the lamination of the second semifinished product, a step of measuring the datum of the second semifinished product through an image acquired through the first vision device may be further performed.

The center values of the first semifinished product before the lamination of the second semifinished product are calculated. Ideally, the center values of the laminated second semifinished product after the lamination of the second semifinished product should match the center values of the first semifinished product. Therefore, the deviation between the center values of the second semifinished product after the lamination and the center values of the first semifinished product before the lamination may be obtained. The deviation may be obtained every time the datum of the second semifinished product after the lamination is measured. After the deviations are obtained for a preset number of times, the moving average thereof may be calculated. That is, the trend of the deviation may be identified, and the offset of the loading device may be automatically corrected using the tendency of the deviation.

That is, a step of automatically correcting the offset of the loading device, using the datum of the second semifinished product that is re-measured after the lamination, may be performed. In addition, it is preferable that the automatic offset correction is performed using a moving average through multiple measurements of the datum of the second semifinished product.

When measuring the datum of the second semifinished product, corner positions for the second semifinished product may be calculated using virtual intersecting straight lines formed at the corner portions on the image of the second semifinished product.

The datum measurement method of the second semifinished product before lamination and the datum measurement method of the second semifinished product after lamination may be identical to each other. However, these measurement methods may be different from the datum measurement method of the first semifinished product.

To achieve the above-described objects, according to one example of the present invention, in a secondary battery stacking device and a secondary battery stacking method for manufacturing an electrode assembly product by laminating a second semifinished product on a first semifinished product laminated on a pallet, it is possible to provide a secondary battery stacking device and a secondary battery stacking method for automatically correcting offset of a laminating device laminating the second semifinished product.

According to the present example, the datum of the second semifinished product may be measured after the lamination of the second semifinished product. By using this, the difference between the center value information of the indeed laminated second semifinished product and the center values reflecting the current offset may be calculated. That is, the offset error may appear as a certain trend. Then, this difference must be additionally corrected for each lamination of the second semifinished product. Therefore, to reduce the offset error appearing as the trend, it is preferable to update the current offset. That is, it is preferable that automatic offset correction is performed rather than manual offset operation. Therefore, it is possible to minimize the size of the additionally corrected value each time the second semifinished product is laminated. Through this, more accurate lamination is possible. This is because an accuracy degree of error correction at a small offset value is higher than the accuracy degree of error correction at a large offset value.

In order to achieve the above-described objects, according to one example of the present invention, a secondary battery stacking device for manufacturing a finished electrode assembly product by laminating a second semifinished product on a first semifinished product may be provided, in which the secondary battery stacking device is characterized by comprising: a loading station where the first semifinished product seated on a pallet is transferred and positioned; a first vision device provided at the loading station and generating an image of the first semifinished product, to measure a datum of the first semifinished product; a laminating device laminating the second semifinished product on the first semifinished product; and a main controller measuring a datum of the first semifinished product through the image of the first semifinished product, wherein the main controller calculates virtual corner positions for the first semifinished product to measure the datum, by using virtual diagonal angles generated on corner inner sides of the corner on the image of the first semifinished product, to correct shape disturbance of the first semifinished product.

The main controller may be provided as a part of a PC or HMI type, where software for calculating a datum through an image may be mounted thereon.

The virtual diagonal may be generated by connecting a reference point and a reference point on two intersecting straight lines, respectively, forming the corner on the image of the first semifinished product.

The datum may be measured by calculating four corner positions.

The shape disturbance may be due to curving or sagging of the first semifinished product.

The main controller may calculate the center values of the first semifinished product as an x value, a y value, and a θ value, which is a twist angle, on the x-y plane through the datum of the first semifinished product.

The pallet may comprise a plurality of supports on which the first semifinished product is seated and supported, and the plurality of supports may support the first semifinished product except for both ends of the first semifinished product. That is, both ends of the first semifinished product are in the air, where only the central portion may be supported through the plurality of supports.

It may comprise a loading station where the second semifinished product waits for lamination; and a second vision device provided in the loading station and generating an image of the second semifinished product, to measure a datum of the second semifinished product.

It is preferable that the main controller measures the datum of the second semifinished product, and the loading device laminates the first semifinished product and the second semifinished product so that their center values coincide using the datum of the first semifinished product and the datum of the second semifinished product.

The loading device may adsorb the upper surface of the second semifinished product and move it to the upper portion of the first semifinished product, and then load the second semifinished product on the upper surface of the first semifinished product.

The first vision device may generate an image of the second semifinished product, to re-measure the seating position of the second semifinished product after the lamination of the second semifinished product.

It is preferable that the main controller automatically corrects the offset of the loading device through the re-measured seating position of the second semifinished product.

### Advantageous Effects

It is possible to provide a stacking device and a stacking method capable of performing accurate stacking.

Through one example of the present invention, it is possible to provide a stacking device and a stacking method capable of effectively correcting shape disturbance of semifinished products which are transferred and wait for loading.

Through one example of the present invention, it is possible to provide a stacking device and a stacking method capable of effectively measuring a datum of a semifinished product even when the shape and support position of a pallet on which the semifinished product is supported are different.

Through one example of the present invention, it is possible to provide a stacking device and a stacking method capable of precisely calculating center values of a semifinished product by effectively correcting shape disturbance caused by curving or bending at both ends of the semifinished product.

Through one example of the present invention, it is possible to provide a stacking device and a stacking method capable of measuring a datum of a semifinished product through four virtual corner points based on the datum using a diagonal angle.

Through one example of the present invention, it is possible to provide a stacking device and a stacking method capable of immediately and effectively responding to a lamination error having a tendency by re-measuring a datum of a finished product after lamination and automatically correcting offsets of a lamination device.

### Description of Drawings

Figure 1 is a plan view showing an appearance in which a first semifinished product is seated and supported on a pallet,
Figure 2 is a plan view of a second semifinished product,
Figure 3 schematically illustrates a first method for measuring a datum through an image of a first semifinished product,
Figure 4 is a plan view showing seating and supporting position relationships between a first semifinished product and a pallet, which are applicable to one example of the present invention,
Figure 5 schematically illustrates a second method for measuring a datum through an image of a first semifinished product,
Figure 6 illustrates one example of a stacking device according to one example of the present invention, and
Figure 7 illustrates one example of a stacking method according to one example of the present invention.

### Best Mode

Hereinafter, a stacking device and a stacking method according to one example of the present invention will be described in detail with reference to the attached drawings.

Figure 4 illustrates an appearance that a mono-cell (20), which is one example of a semifinished product, is laminated to be seated on a pallet (10). To distinguish it from a half-cell to be described below, the mono-cell may be referred to as a first semifinished product and the half-cell may be referred to as a second semifinished product.

The appearance that mono-cells (20) with the same size are seated on the same pallet (10) may vary. As one example, as shown in Figure 1, both ends of the mono-cell (20) may be seated on the support (11), and as shown in Figure 4, both ends of the mono-cell (20) may not be seated on the support (11).

That is, the number of supports (11) and the positions of the supports (11) supporting the mono-cell (20) may vary. This means that the position of the part without supporting the mono-cell (20) may vary due to a space (12) formed between the support (11) and the support (11).

On the pallet (10), the half-cell (30) is additionally laminated in a state where the laminated mono-cell (20) is supported, so that the pallet (10) supports an electrode assembly. Thereafter, an outer periphery of the electrode assembly, where the lamination is completed, may be taped with a separator. Therefore, the taping position may be determined according to the position of the space (12).

Meanwhile, in the present example, the pallet (10) is provided with a plurality of supports (11) in a width direction of the mono-cell (20), where a space (12), i.e., an empty interval, may exist between the supports. The lamination of a plurality of mono-cells (20) may be performed on the pallet (10), and the pallet (10) may be transferred, to sequentially perform the detailed processes of the stacking process.

As one example, a plurality of mono-cells may be laminated on the pallet at a specific position. This may be called a lamination process. Thereafter, the pallet is transferred to a position where a half-cell is laminate, whereby the half-cell may be finally laminated on the mono-cells. This may be called a stacking process. After the stacking process is completed, the pallet may be transferred for a taping process and an inspection process.

When the mono-cell (20) is seated and transferred in the form as shown in Figure 4, the taping may be performed near the electrodes (21, 22) at both ends, but conversely, when the mono-cell (20) is seated and transferred in the form as shown in Figure 1, the taping is not easy near the electrodes (21, 22) at both ends.

Therefore, the position where the pallet (10) supports the mono-cell (20) may be changed for various reasons such as the convenience of taping or installation of a P&P device.

The electrode stacking device according to the present example and a control method thereof may be very effective, especially when both ends of the semifinished product or product cell are transferred without being supported by the pallet.

When the mono-cell (20) is supported in the form shown in Figure 4, both ends of the mono-cell (20) do not have a support point, so that they may sag downward due to their own weight. Figure 4(b) exaggeratingly illustrates sagging at one end of a mono-cell (20). When viewing the semifinished product or product from the side, it may be known that sagging may occur at the end.

Before the half-cell (30) is finally loaded, multiple mono-cells (20) may be sequentially loaded and transferred. The positive electrode, negative electrode, and separator are formed in the form of very thin films. Then, active materials are coated on both sides of the positive and negative electrodes. Therefore, when multiple mono-cells (20) are laminated and both ends of the mono-cell are not supported, the sagging may occur at both ends of the mono-cell (20) due to their own weight. Particularly, as the length of both ends of the mono-cell being in the air increases, the amount of sagging and the sagging angle may become larger.

The inventors of the present invention could identify that when such sagging occurred, the intersection point calculation method (hereinafter, referred to as the "vertical method") described through Figure 3 was highly likely to cause measurement disturbance, and thus, the full- width defect rate increased. This means that the existing vertical method cannot effectively measure z-axis direction deformation of both ends of the electrode assembly. Particularly, when there is a high possibility of sagging in the z-axis direction due to the non-support of both ends of the mono-cell (20), it can be expected that a significant portion of the defect rate is due to the measurement disturbance by the existing vertical method.

When bending occurs at both ends of the mono-cell (20), it can be expected that the left-right width is slightly reduced in the image on the x-y plane. In addition, when the bending amount is different at both ends of the mono-cell (20), it can be expected that in the existing vertical method, the center of the measured mono-cell can be shifted to the left or right. Then, when the bending amount is different at the upper and lower sides of one end of the mono-cell (20), it can be expected that in the existing vertical method, distortion occurs at the center of the measured mono-cell.

Therefore, the inventors of the present invention sought a method capable of accurately measuring the center of the mono-cell (20) even when bending occurs at both ends of the mono-cell (20). During this seeking process, the inventor of the present invention could note that a diagonal angle at a corner portion on an ideal x-y plane could vary depending on the bending amount.

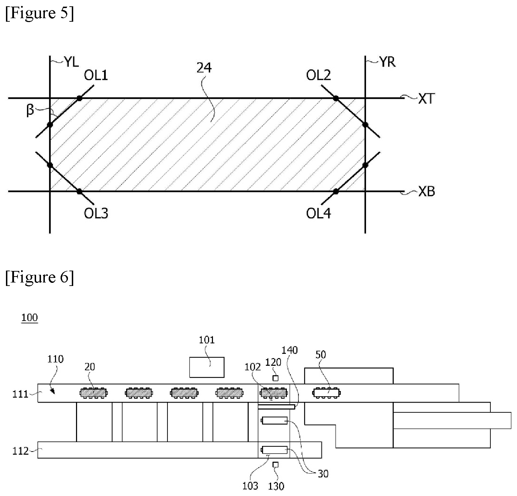

Hereinafter, with reference to Figure 5, a method of measuring an intersection point that can be applied to one example of the present invention will be described in detail.

As shown in Figure 5, when no sagging occurs at both ends of the mono-cell (20), diagonal angles (OL1 to OL4) near the intersection points do not change. For example, the diagonal angle formed by the XUL point and the YLT point, which are ROI reference points, is fixed. Here, the method of generating the ROI reference point may be the same as in the vertical method.

As one example, when such a diagonal angle is 45 degrees, the intersection point, i.e. the corner point, may be calculated through a trigonometric function.

In the ROI reference points illustrated in Figure 3, the angle (diagonal angle) formed by the diagonal connecting the reference point YLT and the reference point XUL, and the YL line has a fixed value when there is no sagging. However, as the sagging of both ends of the mono-cell (20) increases, the reference point YLT moves to the right, and as a result, the diagonal angle decreases. When the diagonal angle is defined as the angle between the diagonal and the XT line, the diagonal angle increases as the sagging increases.

Here, the correlation between the change in the sagging angle or sagging displacement and the change in the diagonal angle can be utilized. It can be known that as the sagging angle increases, the diagonal angle can vary to have a larger deviation from the fixed value. Therefore, as one example, a sagging angle can be calculated using the angle between the diagonal formed by the XUL point and the YLT point, which are the ROI reference points, and the YL straight line, that is, the diagonal angle (β), and a corrected virtual corner point, that is, a corner value, can be calculated using the sagging angle. Therefore, this intersection point measurement method can be called a diagonal method because it is a method of using a diagonal, unlike the existing vertical method.

Here, the corrected virtual corner value can be a corner value when the mono-cell in the sagged state has been converted to a flat state. That is, the actual corner position in the mono-cell in the non-sag state can be calculated.

The calculation of such a corner value may be performed at all four corners. Therefore, after the corner values are calculated at all four corners, the center values of the mono-cell (20) may be measured or calculated. Here, the center values of the mono-cell may comprise coordinates of the center point and a distortion angle in the X-Y plane.

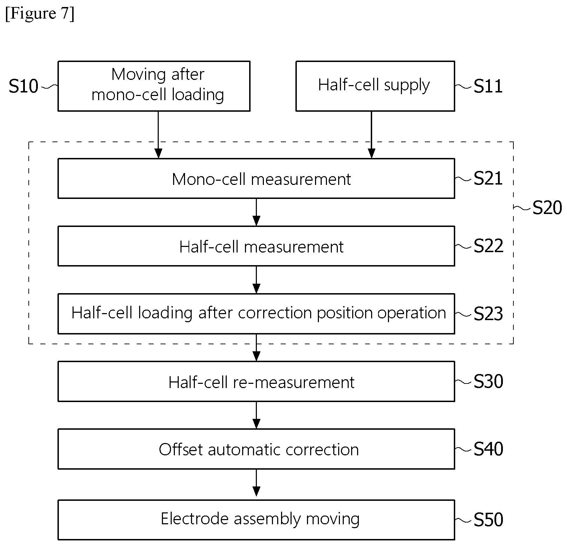

Hereinafter, with reference to Figures 6 and 7, a stacking device according to one example of the present invention, and a control method thereof will be described in detail.

The stacking device (100) may comprise an LMS device. The loaded mono-cell (20) may be moved to a loading station (102) through an LMS (linear moving system) device, i.e., a linear moving device (110) (S10). Here, the loading of the mono-cell may be performed through another device, and then it may be transferred to the stacking device. Of course, the stacking device may comprise a mono-cell loading device, and the mono-cell (20) loaded through the mono-cell loading device may be seated on a pallet and moved to the loading station (102) through the linear moving device. In the loading station (102), a half-cell (30) is further loaded on the loaded mono-cell (20), whereby the loading may be completed.

The stacking device (100) supplies the half-cell (30) to the loading position (S11), to load the half-cell (30). To this end, a linear moving device (110) may be provided. The linear moving device (111) for moving the mono-cell (20) and the linear moving device (112) for moving the half-cell (30) may be separated.

The stacking device (100) may comprise a device for manufacturing a half-cell (30) by laminating a separator, a positive electrode, and a separator, and may move the half-cell (30) to a position for loading, i.e., a loading station (103) after manufacturing the half-cell (30). Of course, the half-cell (30) may be manufactured through another device, and then transferred to the stacking device.

The half-cell (30) may be loaded into the loading station (103) and prepared for loading. The loading of the half-cell (30) may be performed through the half-cell loading device (140). The half-cell loading device (140) may hold and move the half-cell (30) located at the loading station (103). The half-cell loading device (150) may adsorb the upper part of the half-cell to move.

To precisely load the half-cell (30) additionally to the loaded mono-cell (20), the center values of the current mono-cell (20) and the center values of the half-cell (30) must be measured. This is because it is preferable to load the half-cell (30) so that its center values exactly match the center values of the mono-cell (20). Here, the center values may mean x, y, and θ values.

For loading of the half-cell (30) (S20), the mono-cell measurement (S21) may be performed first. The x-y plane image of the mono-cell (20) may be generated through the vision (120) provided in the loading station (102). Through the generated image, four virtual corner values may be calculated, and through this, the center values of the mono-cell (20) may be calculated. It is preferable that the above-described diagonal method is used as this calculation method.

For loading of the half-cell (30) (S20), the half-cell measurement (S22) may be performed. The x-y plane image of the half-cell (30) may be generated through the vision (130) provided in the loading station (103). The center values of the half-cell (30) may be calculated through the generated image. As this calculation method, the above-described diagonal method or vertical method may be used.

If the measurement of the mono-cell (20) and the half-cell (30) is completed, the half-cell loading (S23) is performed after the correction position operation, whereby the loading step (S20) may be ended.

The half-cell loading (S23) may be performed through the half-cell loading device (140). The half-cell loading device (130) may be provided to load the half-cell by moving in x, y, and z axes, i.e., three dimensions. During the process of moving and loading a half-cell (30) through the half-cell loading device (140), a new half-cell (30) may be introduced into the loading station (103).

Through the measurement of the mono-cell (20), the error values for the center values of the mono-cell (20) may be calculated, and through the measurement of the half-cell (30), the error values for the center values of the mono-cell (20) may be calculated. That is, the mono-cell (20) and the half-cell (30) each have reference center values, and through actual measurement, the reference center values and the center values having errors are measured. At this time, the deviation between the reference center value and the measured center value may be called an error value.

The half-cell may be loaded by reflecting the error values for the reference center values of the mono-cell (20) and the error values for the reference center values of the half-cell (30). That is, the half-cell (30) may be loaded by reflecting the correction position.

If the loading of the half-cell (30) is completed, the loaded electrode assembly (50) may be transferred to a next process through the linear moving device (111). The next process may be a taping process of wrapping the outer surface of the electrode assembly (50) with the separator, as described above.

Meanwhile, it has been described that the half-cell loading device (130) loads the half-cell after the correction position operation. Despite this correction position operation, loading defects may occur. That is, electrode breakage defect s according to the full-width defects may occur, and such defects may be confirmed in the finished product state.

Thereafter, a worker may manually adjust offsets by operating a manual offset operator. That is, the correction position may be operated by reflecting the offset values input by the worker, and the half-cell loading device (130) may load the half-cell based on this. Of course, the half-cell may also be loaded by reflecting the offset values at the operated correction position. The offset values may have an x value, a y value, and a θ value.

However, when the offset values are manually operated, it takes a very long time until appropriateness of the operation is confirmed. This is because the accuracy degree of the loading is confirmed after the loading is performed through new offsets, and then multiple processes are completed. As one example, after both the taping process and the electrode tab welding process are completed, it is inevitable to check whether the loading is defective or the offsets are appropriate in the electrode assembly which is a finished product. That is, there is a very long lead time to check whether the manual offset operation is appropriate.

To solve this problem, according to the present example, immediate and effective offset correction may be performed by re-measuring the position of the half-cell (30) (S30).

Specifically, if the lamination of the half-cell (30) on the mono-cell (20) is completed, the half-cell (30) is positioned on the upper surface of the electrode assembly. At this time, the datum of the half-cell (30) may be re-measured through the first vision device (120). When the center values of the mono-cell (20) before loading match the center values of the half-cell (30) after loading, it can be known that the loading has been performed very accurately. That is, this means that the current offsets are accurate.

However, errors may occur due to the characteristics of the loading device (140), and such errors may appear as a certain trend.

For example, if the error appears a tend which is (20, 20, 4) in a state where the (x, y, θ) offset is set to (10, 10, 2), the additional error correction of (10, 10, 2) must be performed each time a half-cell is loaded. Therefore, when the offset is corrected to (20, 20, 4), additional error correction may be excluded or minimized each time a half-cell is loaded.

Therefore, it is preferable that the offset of the loading device is automatically corrected by repeating re-measurement (S30) of the half-cell (30) position. As one example, a moving average of error values acquired through approximately 30 re-measurements may be obtained, and such a moving average may be reflected in the offset.

Of course, the number of half-cell re-measurements performed for automatic offset correction may also be set differently.

Meanwhile, the main controller (101) performing control of the stacking device according to the present example may be implemented in the form of a PC or HMI. In this instance, a display is provided, and it is preferable that an image for datum measurement is displayed through the display.

Furthermore, the datum measurement process may be additionally displayed on the displayed image. As one example, a virtual straight line or diagonal for calculating a corner point may be additionally created and displayed on the image, and the coordinates of the corner point or the center values of the datum may be displayed as numerical values.

Through this, it is possible to intuitively confirm that the loading process is performed accurately.

It has been described above that different datum measurement methods may be used depending on the support positions of the mono-cell and the pallet. Therefore, it is preferable that the datum measurement method is provided so that it can be selected through the HMI. In addition, it is preferable that the offset correction method is also provided so that it can be selected through the HMI. As one example, it is preferable that a worker can select manual offset correction and automatic offset correction through the HMI.

### Industrial Applicability

It is described in the Detailed Description of Invention.

## Claims

1. A secondary battery stacking method for manufacturing a finished electrode assembly product by laminating a second semifinished product on a first semifinished product, in which the secondary battery stacking method is **characterized by** comprising:
a step of measuring a datum of the first semifinished product through an image acquired through a first vision device;
a step of measuring a datum of the second semifinished product through an image acquired through a second vision device; and
a step of laminating the second semifinished product on the first semifinished product through a loading device after correction position operation using the datum of the first semifinished product and the datum of the second semifinished product, wherein
to correct shape disturbance of the first semifinished product when measuring the datum of the first semifinished product, virtual corner positions for the first semifinished product are calculated, using virtual diagonal angles generated at corner inner sides on the image of the first semifinished product.

2. The secondary battery stacking method according to claim 1, **characterized in that** the virtual diagonal is created by connecting a reference point and a reference point in two intersecting straight lines forming the corner, respectively, on the image of the first semifinished product.

3. The secondary battery stacking device according to claim 2, **characterized in that**
the datum of the first semifinished product is measured by calculating four corner positions.

4. The secondary battery stacking method according to claim 3, **characterized in that**
the shape disturbance is due to curving or sagging of the first semifinished product.

5. The secondary battery stacking method according to claim 4, **characterized in that**
through the datum of the first semifinished product, the center values of the first semifinished product are calculated as an x value, a y value, and a θ value, which is a twist angle, on an x-y plane.

6. The secondary battery stacking method according to claim 1, **characterized in that**
the image of the first semifinished product and the virtual straight line on the image are displayed through a display, so that the datum measurement process of the first semifinished product is visually displayed.

7. The secondary battery stacking method according to claim 1, **characterized by** comprising,
after the lamination of the second semifinished product, a step of measuring the datum of the second semifinished product through an image acquired through the first vision device.

8. The secondary battery stacking method according to claim 7, **characterized by** comprising
a step of automatically correcting the offset of the loading device, using the datum of the second semifinished product that is re-measured after the lamination.

9. The secondary battery stacking method according to claim 8, **characterized in that**
the automatic offset correction is performed using a moving average through multiple measurements of the datum of the second semifinished product.

10. The secondary battery stacking method according to claim 1, **characterized in that**
when measuring the datum of the second semifinished product, corner positions for the second semifinished product are calculated using virtual intersecting straight lines formed at the corner portions on the image of the second semifinished product.

11. A secondary battery stacking device for manufacturing a finished electrode assembly product by laminating a second semifinished product on a first semifinished product, in which the secondary battery stacking device is **characterized by** comprising:
a loading station where the first semifinished product seated on a pallet is transferred and positioned;
a first vision device provided at the loading station and generating an image of the first semifinished product, to measure a datum of the first semifinished product;
a laminating device laminating the second semifinished product on the first semifinished product; and
a main controller measuring a datum of the first semifinished product through the image of the first semifinished product, wherein
the main controller calculates virtual corner positions for the first semifinished product to measure the datum, by using virtual diagonal angles generated on corner inner sides of the corner on the image of the first semifinished product, to correct shape disturbance of the first semifinished product.

12. The secondary battery stacking device according to claim 11, **characterized in that**
the virtual diagonal is generated by connecting a reference point and a reference point on two intersecting straight lines, respectively, forming the corner on the image of the first semifinished product.

13. The secondary battery stacking device according to claim 12, **characterized in that**
the datum is measured by calculating four corner positions.

14. The secondary battery stacking device according to claim 13, **characterized in that**
the shape disturbance is due to curving or sagging of the first semifinished product.

15. The secondary battery stacking device according to claim 14, **characterized in that**
the main controller calculates the center values of the first semifinished product as an x value, a y value, and a θ value, which is a twist angle, on the x-y plane through the datum of the first semifinished product.

16. The secondary battery stacking device according to claim 11, **characterized in that**
the pallet comprises a plurality of supports on which the first semifinished product is seated and supported, and the plurality of supports support the first semifinished product except for both ends of the first semifinished product.

17. The secondary battery stacking device according to claim 11, **characterized by** comprising:
a loading station where the second semifinished product waits for lamination; and
a second vision device provided in the loading station and generating an image of the second semifinished product, to measure a datum of the second semifinished product.

18. The secondary battery stacking device according to claim 17, **characterized in that**
the main controller measures the datum of the second semifinished product, and
the loading device laminates the first semifinished product and the second semifinished product so that their center values coincide using the datum of the first semifinished product and the datum of the second semifinished product.

19. The secondary battery stacking device according to claim 18, **characterized in that**
the first vision device generates an image of the second semifinished product, to re-measure the seating position of the second semifinished product after the lamination of the second semifinished product.

20. The secondary battery stacking device according to claim 19, **characterized in that**
the main controller automatically corrects the offset of the loading device through the re-measured seating position of the second semifinished product.
